# EUROPEAN PATENT APPLICATION

(11) **EP 1 667 263 A1**
(43) Date of publication of application: **07.06.2006**
(21) Application number: 04773222.7
(22) Date of filing: 10.09.2004
(51) Int. Cl.: H01M 8/02, H01B 1/06

(54) **PROTON CONDUCTIVE MEMBRANE, METHOD FOR PRODUCING SAME, AND FUEL CELL USING SAME**

(30) Priority: 12.09.2003 JP 2003320969
(71) Applicant: ROHM CO., LTD., Kyoto-shi, Kyoto 615-8585 (JP)
(72) Inventor: Takaoka, Masaki, c/o Rohm Co., Ltd., Kyoto-shi, Kyoto 615-8585 (JP); Kamisawa, Akira, c/o Rohm Co., Ltd., Kyoto-shi, Kyoto 615-8585 (JP); Nishiyama, Norikazu, Toyonaka-shi, Osaka 560-0055 (JP)
(74) Representative: Leson, Thomas Johannes Alois
(86) International application number: PCT/JP2004/013578
(87) International publication number: WO 2005/027250

(57) **Abstract**

An object of the present invention is to provide a stable protonically-conductive membrane for fuel cell having a high reliability.

Another object of the present invention is to provide a high efficiency fuel cell having a high mechanical strength which operates over an extended period of time.

The protonically-conductive membrane (ionically-conductive membrane) of the present invention is formed by a mesoporous thin film comprising as a main component a crosslinked structure having a metal-oxygen skeleton having an acid group connected to at least a part thereof and having pores (3) periodically aligned therein.

## Description

### <Technical Field>

The present invention relates to a protonically-conductive membrane for fuel cell and a method for producing same and particularly to a protonically-conductive membrane for direct methanol type fuel cell which operates stably over an extended period of time.

### <Background Art>

In recent years, fuel cells have been noted as a next-generation electricity-generating apparatus which can make contributions to the solution to environmental problems and energy problems that are socially great assignments because they exhibit a high electricity-generating efficiency and excellent environmental characteristics.

Fuel cells are normally classified into several types by the kind of electrolyte. Among these types of fuel cells, direct methanol fuel cell (hereinafter referred to as "DMFC") which directly receives methanol as a liquid fuel to cause electrochemical reaction by which it can work without using any reformer.

DMFC can use a liquid fuel having a high energy density and thus requires no reformer. Therefore, DMFC provides a compact system. Accordingly, DMFC has been attracted particularly as an electric supply for portable apparatus substituting for lithium ion battery.

In DMFC, the following electrochemical reaction occurs to cause methanol to react directly with water on the anode and produce water on the cathode.

Anode: CH₃OH + H₂O → CO₂ + 6H⁺ + 6e⁻

Cathode: 6H⁺ + 2/3O₂ + 6e⁻ → 3H₂O

Herein, the protonically-conductive membrane is functioning as transmitting proton produced on the anode to the cathode. The movement of proton is associated with the flow of electron. In order to obtain a high output, i.e., high current density, it is necessary that the high-volume proton conduction be performed at a high rate. Accordingly, the performance of the protonically-conductive membrane greatly governs the performance of DMFC. Further, the protonically-conductive membrane not only plays a role in the conduction of proton but also functioning as an insulating film for electrically insulating anode and cathode from each other as well as a fuel barrier for preventing the fuel supplied into the anode from leaking to the cathode.

As a high performance protonically-conductive membrane there has been heretofore used a fluororesin such as perfluorocarbonsulfonic acid polymer (Nafion®) (Patent Reference 1).

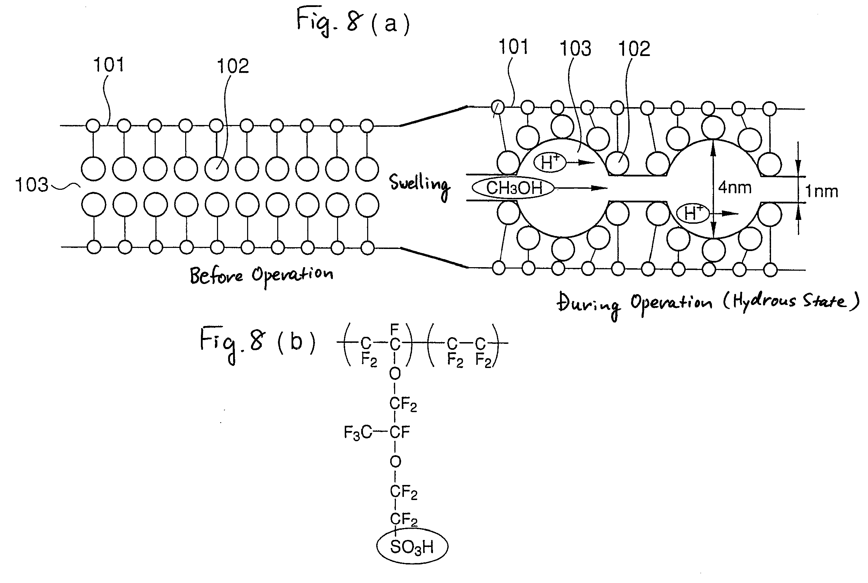

In such a protonically-conductive membrane, some sulfonic acid groups are agglomerated to form a reverse micelle structure. Therefore, such a protonically-conductive membrane is disadvantageous in that it can easily swell to cause methanol crossover as diagrammatically shown in the structure of perfluorocarbonsulfonic acid polymer before and during operation in Fig. 8. In other words, a protonically-conductive channel 103 is formed in a reverse micelle structure formed by a sulfonic acid group 102 connected to a perfluoro chain 101.

As can be seen in the comparison of the left portion with the right portion of Fig. 8, such a fluororesin membrane is disadvantageous in that swelling easily causes methanol crossover and change of the protonically-conductive structure in the membrane. Thus, methanol cannot be made sufficient use of, making it impossible to cause stable electrode reaction. As a result, the electricity generating efficiency is not sufficient.

It is also disadvantageous in that the repetition of swelling can easily cause deterioration of mechanical strength.

### (Patent Reference 1) JP-A-7-90111

### <Disclosure of the Invention>

The present invention has been carried out in the light of the above-mentioned circumstances and has an object of providing a stable protonically-conductive membrane for fuel cell having a high reliability.

Another object of the present invention is to provide a high efficiency fuel cell having a high mechanical strength which operates over an extended period of time.

To this end, the protonically-conductive membrane of the present invention is formed by a mesoporous thin film comprising as a main component a crosslinked structure having a metal-oxygen skeleton having an acid group connected to at least a part thereof and having pores periodically aligned therein.

In this arrangement, the protonically-conductive membrane is formed by a crosslinked structure having a rigid metal-oxygen skeleton, making it possible to provide a protonically-conductive membrane having a high reliability which is rigid in its skeleton structure itself and can keep its pore diameter constant without swelling and eliminate crossover of methanol.

Further, in the present invention, the said crosslinked structure in the said protonically-conductive membrane comprises a silicon-oxygen bond as a main component.

In this arrangement, a stable protonically-conductive membrane having a high heat resistance can be provided.

Moreover, in the present invention, the said crosslinked structure in the said protonically-conductive membrane has columnar pores aligned periodically in the thickness direction of the said mesoporous thin film.

In this arrangement, columnar pores are regularly aligned extending through the thickness of the mesoporous thin film to form a protonically-conductive channel in the thickness direction, making it possible to reduce the length of the protonically-conductive channel and hence allowing high speed conduction. Further, since the diameter of these pores can be adjusted, methanol crossover can be inhibited by adjusting the pore diameter to a proper value.

Moreover, in the present invention, the thickness of the said protonically-conductive membrane is 10 µm or less.

In this arrangement, a thin protonically-conductive membrane having a high mechanical strength can be provided, making it possible to enhance the protonic conductivity of fuel cell.

Further, in the present invention, the said acid group in the said protonically-conductive membrane is a sulfonic acid group.

In this arrangement, a sulfonic acid group which is a strong acid is provided, making it possible to obtain a high protonic conductivity.

Moreover, the fuel cell of the present invention is formed by the aforementioned protonically-conductive membrane.

Further, the method for producing a protonically-conductive membrane of the present invention comprises a step of preparing a precursor solution containing a metal-oxygen derivative and a surface active agent, a step of crosslinking the said precursor solution to form a crosslinked structure and a step of decomposing the said surface active agent away from the crosslinked structure obtained at the said crosslinking step, whereby a mesoporous thin film comprising as a main component a crosslinked structure having a metal-oxygen skeleton having an acid group connected to at least a part thereof and having pores periodically aligned therein is formed.

In this manner, the diameter of pores can be easily adjusted by adjusting the amount and formulation of the surface active agent. Further, a protonically-conductive membrane having a high reliability can be easily formed which is rigid in its skeleton structure itself and can keep its pore diameter constant without swelling and eliminate crossover of methanol. By the way, the adjustment of the molecular length, too, is effective, but the molecular length, too, is adjusted as a part of the formulation.

The present invention also concerns the aforementioned method for producing a protonically-conductive membrane, wherein there comprises a step of supplying the said precursor solution onto the surface of a substrate and the said crosslinking step involves a step of crosslinking the said precursor solution on the surface of the said substrate.

In this arrangement, a current collecting structure can be formed without forming any special electrodes, making it possible to form a small-sized fuel cell which can be easily produced.

Moreover, the present invention concerns the said method for producing a protonically-conductive membrane, wherein the diameter of the pores ranges from 10 nm to 10 µm.

In this arrangement, methanol which is a fuel can be fairly passed and the mesoporous thin film can be easily formed. Further, the conventional fluorine-based resin membranes which are too thin are disadvantageous in that when the temperature rises, they absorb water to undergo creep easily and strength drop, but the protonically-conductive membrane formed by the method of the present invention is formed by a crosslinked structure comprising a silicon-oxygen skeleton and thus is unlikely to have these problems.

It is further desired that the diameter of the pores range from 50 nm to 5 µm, making it possible to provide a higher methanol permeability and keep the strength well.

Further, the present invention concerns the said method for producing a protonically-conductive membrane, wherein there comprises a step of preparing a precursor solution containing a silica derivative and a surface active agent, a step of crosslinking the said precursor solution to form a crosslinked structure and a step of decomposing the said surface active agent away, whereby a mesoporous thin film comprising as a main component a crosslinked structure having a metal-oxygen skeleton having an acid group connected to at least a part thereof and having pores periodically aligned therein is formed.

In this manner, a crosslinked structure can be easily formed.

Moreover, the present invention concerns the said method for producing a protonically-conductive membrane, wherein the said decomposing step involves a step of calcining the said crosslinked structure to remove the surface active agent.

In this manner, a mesoporous thin film having pores aligned regularly therein can be easily formed.

Further, the present invention concerns the said method for producing a protonically-conductive membrane, comprising a step of exposing the substrate having the said precursor solution supplied therein to a tetraethoxysilane (TEOS) vapor prior to the removal of the said surface active agent to raise the density of the said silicon-oxygen skeleton.

In this manner, the density of the silicon-oxygen skeleton can be raised, making it possible to increase the introduced amount of acid groups.

Moreover, the present invention concerns the said method for producing a protonically-conductive membrane, wherein the said step of forming a crosslinked structure involves a step of extracting the said surface active agent with an acid.

In this manner, the surface active agent can be extracted without passing through any high temperature step, making it possible to extract the surface active agent without releasing the acid groups which have been introduced at the silylating step.

In other words, if silylation precedes, it is likely that the mercapto group can be separated when it is tried to remove the surface active agent by calcining, but the surface active agent can be easily removed by extracting with an acid.

Further, the present invention concerns the said method for producing a protonically-conductive membrane, comprising a step of exposing the substrate having the said precursor solution supplied therein to a mercaptopropyl trimethoxysilane (MPTMS) vapor prior to the said step of extracting with an acid to silylate the said crosslinked structure.

In this manner, an acid group can be introduced also into the micropores in the silicon-oxygen skeleton, making it possible to form a protonically-conductive membrane having a high protonic conductivity and hence increase the introduced amount of acid groups (sulfonic acid group).

Moreover, the present invention concerns the said method for producing a protonically-conductive membrane, wherein the said substrate is formed by a porous carbon.

In this arrangement, a good conductivity can be provided and the adhesion to the oxygen-silicon crosslinked structure, too, is good.

Further, the present invention concerns the said method for producing a protonically-conductive membrane, wherein the said substrate is formed by a porous silicon.

Moreover, the present invention concerns the said method for producing a protonically-conductive membrane, comprising a step of preparing a precursor solution containing water, ethanol, hydrochloric acid, a surface active agent and TEOS, a step of spreading the said precursor solution over a substrate, a step of removing the said surface active agent to form a crosslinked structure having a silicon-oxygen skeleton, a step of silylating the said crosslinked structure to form a crosslinked structure having a mercapto group in the silicon-oxygen skeleton and a step of oxidizing the mercapto group in the said crosslinked structure to form a crosslinked structure having a sulfonic acid group.

In accordance with this method, the porosity and the formation of protonically-conductive channel can be controlled by controlling the composition ratio of the precursor solution and the silylating and oxidizing conditions. In this manner, the permeability to methanol and proton can be controlled. Further, by once introducing mercapto groups and then oxidizing them, the density of sulfonic acid groups introduced can be raised.

Moreover, the present invention concerns the said method for producing a protonically-conductive membrane, wherein the said silylating step is a step of exposing to a mercaptoalkyl methoxysilane ((SH)ₙSi (CH₂)ₘ(CH₃O) ₄₋ₙ; n = 1 to 3, m= 0, 1, 2 ... ) vapor.

Further, the present invention concerns the said method for producing a protonically-conductive membrane, wherein the said silylating step is a step of exposing to a mercatopropyl trimethoxysilane (MPTMS) vapor.

Moreover, the present invention concerns the said method for producing a protonically-conductive membrane, wherein the said silylating step is a step of exposing to a mercaptoalkyl methoxysilane ((SH)ₙSi(CH₂)ₘ(CH₃O)₄₋ₙ; n = 1 to 3) vapor.

In accordance with this method, a crosslinked structure having a high ionic conductivity can be obtained.

Further, the present invention concerns the said method for producing a protonically-conductive membrane, comprising a step of preparing a precursor solution containing water, ethanol, hydrochloric acid, a surface active agent and TEOS, a step of spreading the said precursor solution over a substrate, a step of removing the said surface active agent to form a crosslinked structure having a silicon-oxygen skeleton and a step of subjecting the said crosslinked structure to treatment with phosphoric acid to form a crosslinked structure having a phosphoric acid group in the silicon-oxygen skeleton.

In accordance with this method, no oxidizing step is needed, making it difficult for the structure to destroy. Moreover, as compared with MPTMS treatment, this method provides a good reproducibility, making it possible to obtain a more stable ionic conductivity. The ionic conductivity was 0.02 S/cm at maximum.

Further, the present invention concerns the said method for producing a protonically-conductive membrane, wherein the said phosphoric acid treatment step is a step of exposing to an ethyl phosphate ((C₂H₅O)₃₋ₙ(OH)ₙPO; n = 0, 1, 2) vapor.

Moreover, the present invention concerns the said method for producing a protonically-conductive membrane, wherein the said phosphoric acid treatment step is a step of exposing to an ethyl phosphite ((C₂H₅O)₃₋ₙ (OH)ₙP; n = 0, 1, 2) vapor.

Further, the present invention concerns the said method for producing a protonically-conductive membrane, wherein the said phosphoric acid treatment step is a step of exposing to a vapor of ethyl phosphite ((C₂H₅O) (OH)₂P).

More preferably, the step of supplying a precursor solution onto the substrate involves a step of dipping the substrate in the said precursor solution and then pulling up the substrate at a desired speed.

More preferably, the aforementioned supplying step is a step of repeatedly spreading the said precursor solution over the substrate.

Even more preferably, the said supplying step is a rotary spreading step of dropping the said precursor solution onto the substrate and rotating the substrate.

In accordance with the said method, the thickness of the membrane or the diameter of the pores can be adjusted to adjust the methanol permeability and the protonic conductivity easily, making it possible to form a protonically-conductive membrane at a good productivity.

Further, in accordance with the method of the present invention, a silica derivative is selected, making it possible to further adjust the porosity.

As mentioned above, in accordance with the present invention, a protonically-conductive membrane having a high reliability can be provided which is formed by a crosslinked structure having a rigid metal-oxygen skeleton and thus is rigid in its skeleton structure itself and can keep the pore diameter constant without swelling and eliminate crossover of methanol.

### <Brief Description of the Drawings>

Fig. 1 is a diagrammatic view illustrating the configuration of the protonically-conductive membrane formed by an embodiment of implementation of the invention;
Fig. 2 is an enlarged view of an essential part of the protonically-conductive membrane;
Figs. 3 (a) to 3(f) are the diagrams illustrating a process for the production of a fuel cell comprising a protonically-conductive membrane according to Embodiment 1 of implementation of the invention;
Fig. 4 is a flow chart illustrating a process for the formation of the protonically-conductive membrane according to Embodiment 1 of implementation of the invention;
Fig. 5 is a configurational view illustrating the electrophoresis in Embodiment 1 of implementation of the invention;
Fig. 6 is a flow chart illustrating a process for the formation of a protonically-conductive membrane according to Embodiment 2 of implementation of the invention;
Figs. 7 (a) to 7 (g) are the diagram illustrating a process for the production of a fuel cell comprising a protonically-conductive membrane according to Embodiment 3 of implementation of the invention; and
Fig. 8 is a diagram illustrating swelling of a related art protonically-conductive membrane.

In these drawings, the reference numeral 1 indicates a perfluoro group, the reference numeral 2 indicates a sulfonic acid group, and the reference numeral 3 indicates a protonically-conductive channel.

### <Best Mode for Carrying Out the Invention>

An embodiment of the fuel cell according to the invention will be described in detail in connection with the attached drawings.

### Embodiment 1

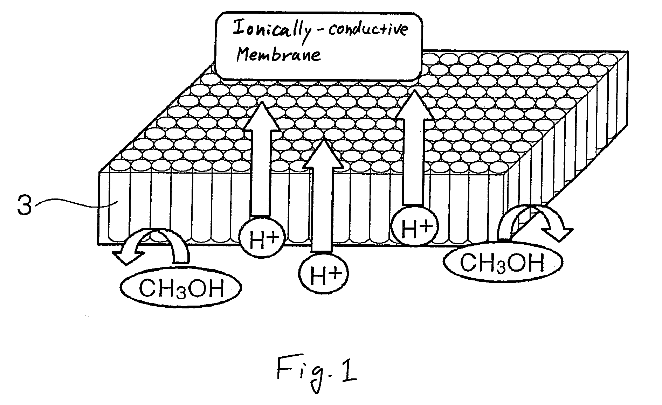

As diagrammatically shown in Fig. 1, the protonically-conductive membrane of the present embodiment is made of a mesoporous thin film comprising as a main component a crosslinked structure having a metal-oxygen skeleton having an acid group connected to at least a part thereof and having pores periodically aligned therein to form a protonically-conductive channel 3.

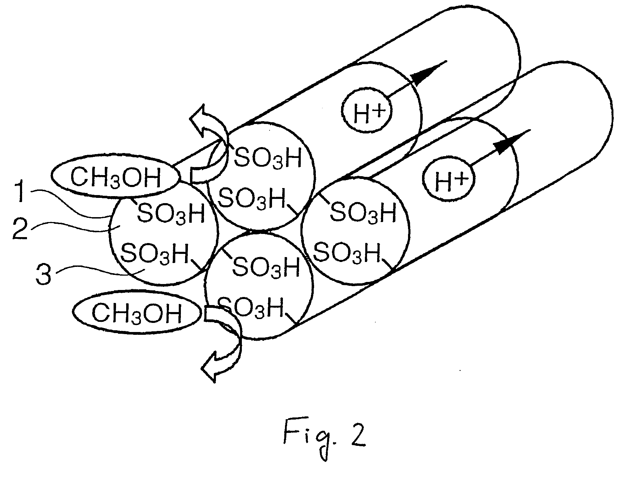

Fig. 2 is an enlarged view of an essential part of Fig. 1. A columnar pore which forms a protonically-conductive channel 3 has a sulfonic acid group incorporated therein to have an enhanced protonic conductivity.

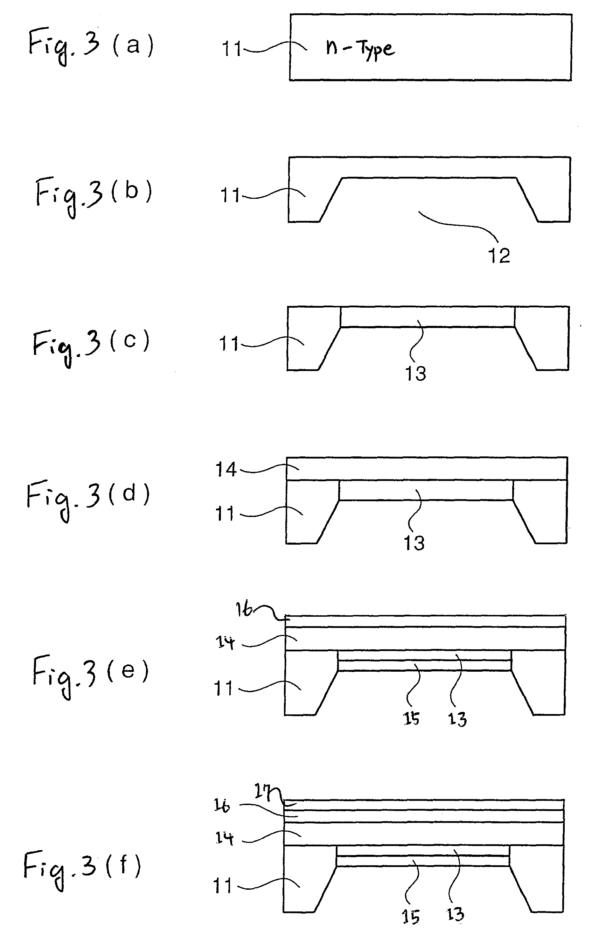

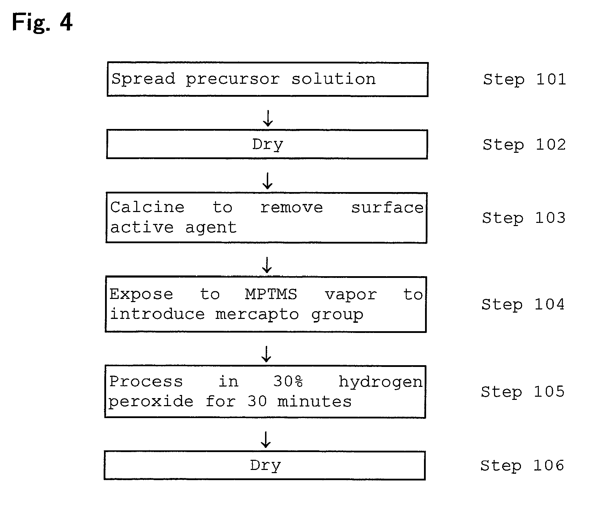

A method for forming the electrode-electrolyte assembly (MEA) of the fuel cell will be described hereinafter. Figs. 3(a) to 3(f) each depict a procedure of forming MEA. Fig. 4 is a flow chart illustrating a procedure of forming a protonically-conductive membrane.

Firstly, as shown in Fig. 3(a), an n-type silicon substrate 11 having a 100 plane having a specific resistance of 5 × 10¹⁸ cm⁻³ as a main plane is prepared.

Subsequently, as shown in Fig. 3(b), a resist pattern having an opening in a cell forming region is formed on the back side of the silicon substrate 11. The silicon substrate 11 is then subjected to anisotropic etching with a 83°C TMAH solution to a desired depth. In this manner, an opening 12 is formed for forming a thin portion.

Subsequently, as shown in Fig. Fig. 3(c), the silicon substrate is anodized so that the entire silicon substrate 11 becomes a porous silicon 13 having a pore diameter of from 10 nm to 5 µm.

Subsequently, a mesoporous thin film (protonically-conductive membrane) having columnar pores aligned periodically and perpendicular to the surface of the silicon substrate is formed on the porous silica 13.

In some detail, a cationici cetyl trimethyl ammonium bromide (C16TAB : C₁₆H₃₃N⁺ (CH₃)₃Br ) as a surface active agent, TEOS (tetraethoxysilane) as a silica derivative and hydrochloric acid (HCl) as an acid catalyst are dissolved in a mixture of H₂O (water) and Et-OH (alcohol), and then stirred in a mixing vessel to prepare a precursor solution. The molar ratio of these components in the precursor solution (H₂O : Et-OH : HCl : C16TAB : TEOS) is 100 : 76 : 5 : 0.5 : 3. The mixed solution thus prepared is spread over the surface of the silicon substrate on which the porous silicon 13 has been coated using a spinner as shown in Fig. 3(b) (Step 101 in Fig. 4), and then dried at 90°C for 5 minutes (Step 102 in Fig. 4) so that the silica derivative is subjected to hydrolytic polycondensation reaction to undergo polymerization (precrosslinking step). Thus, a periodic self-agglomerate of surface active agent is formed.

This self-agglomerate forms a rod-shaped micelle structure having a plurality of molecules C₁₆H₃₃N⁺(CH₃)₃Br agglomerated. In this arrangement, as the percent agglomeration rises with the rise of concentration, the portion freed of methyl group becomes more hollow. Thus, a crosslinked structure having pores aligned therein is formed.

Subsequently, the self-agglomerate is washed with water, dried, and then heated/calcined in a 500°C nitrogen atmosphere for 6 hours (Step 103 in Fig. 4) so that the surface active agent in the matrix is fully thermally decomposed away to form a pure mesoporous thin film. The silicon substrate is then processed with a 180°C MPTS vapor for 4 hours (Step 104 in Fig. 4) to form a silicon-oxygen crosslinked structure having mercapto group connected thereto. Thereafter, the silicon substrate is subjected to heat treatment in a 30% hydrogen peroxide for 30 minutes (Step 105 in Fig. 4), and then dried (Step 106 in Fig. 4).

In this manner, a protonically-conductive membrane 14 is formed as shown in Fig. 3(d). The protonically-conductive membrane 14 has columnar pores aligned along the thickness of the layer.

Fig. 2 is a configurational view illustrating a section of this structure. As can be seen in Fig. 2, columnar pores are formed. Further, a porous thin film having a skeleton structure containing a large number of pores is formed.

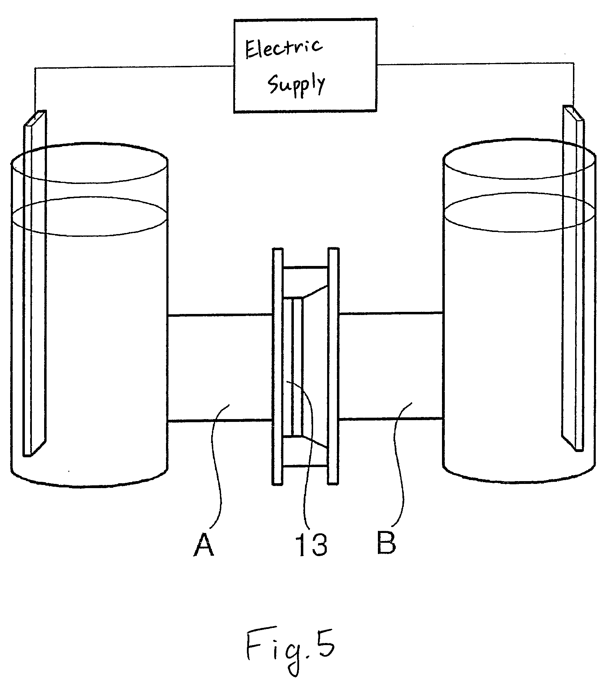

Thereafter, a carbon-supported platinum, a 5 wt-% Nafion® solution and ethanol are mixed, and then subjected to supersonic dispersion to prepare a suspension A. As shown in Fig. 5, a voltage is then applied to the system with the suspension A in contact with the back side of the porous silicon 13 and a 0.1 M aqueous solution of perchloric acid B provided on the other side to cause electrophoresis by which a catalyst layer 15 is formed. During this process, Nafion® in the suspension is attached to the surface of the porous silicon 13 to act as a dispersant. Thus, the catalyst layer 15 containing platinum is formed.

Subsequently, as shown in Fig. 3(e), a catalyst layer 16 is similarly formed on the front surface of the protonically-conductive membrane 14.

Subsequently, as shown in Fig. 3 (f), an electrode layer 17 is formed.

In this manner, MEA is formed. A diffusion electrode (not shown) is then attached to this MEA to form a DMFC type fuel cell.

In this arrangement, the protonically-conductive membrane is formed by a silicon-oxygen crosslinked structure having columnar pores aligned regularly and thus has a high mechanical strength and undergoes no swelling. Further, since this protonically-conductive membrane undergoes no swelling, it undergoes little methanol crossover and exhibits a high efficiency and a high reliability.

By subjecting the silicon substrate to processing with TEOS vapor prior to calcination, the volumetric shrinkage during calcination can be eliminated to strengthen the silica skeleton, making it possible to further enhance the mechanical strength thereof.

While the present embodiment has been described with reference to the case where the protonically-conductive membrane is formed by an inorganic structure mainly composed of a crosslinked structure containing a silicon-oxygen bond, an organic-inorganic hybrid crosslinked structure containing an organic group in the silicon-oxygen skeleton may be used.

### Embodiment 2

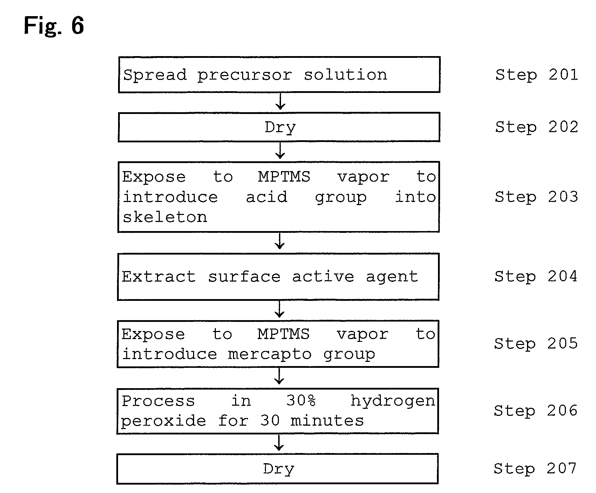

In Embodiment 1, silylation is effected after calcination. In the present embodiment, however, silylation is effected prior to extraction of surface active agent by calcination as shown in the flow chart of Fig. 6 to introduce an acid group (mercapto group) also into the silicon-oxygen skeleton so that the surface active agent can be subsequently extracted with hydrochloric acid.

As shown in the flow chart of Fig. 6, a cationici cetyl trimethyl ammonium bromide (C16TAB: C₁₆H₃₃N⁺ (CH₃) ₃Br) as a surface active agent, TEOS (tetraethoxysilane) as a silica derivative and hydrochloric acid (HC1) as an acid catalyst are dissolved in a mixture of H₂O (water) and Et-OH (alcohol), and then stirred in a mixing vessel to prepare a precursor solution. The molar ratio of these components in the precursor solution (H₂O : Et-OH : HCl : C16TAB : TEOS) is 100 : 76 : 5 : 0.5 : 3. The mixed solution thus prepared is spread over the surface of the silicon substrate on which the porous silicon 13 has been formed using a spinner as shown in Fig. 3(b) (Step 201 in Fig. 6), and then dried at 90°C for 5 minutes (Step 202 in Fig. 6) so that the silica derivative is subjected to hydrolytic polycondensation reaction to undergo polymerization (precrosslinking step) . Thus, a periodic self-agglomerate of surface active agent is formed.

This self-agglomerate forms a rod-shaped micelle structure having a plurality of molecules C₁₆H₃₃N⁺(CH₃) ₃Br agglomerated. In this arrangement, as the percent agglomeration rises with the rise of concentration, the portion freed of methyl group becomes more hollow. Thus, a crosslinked structure having pores aligned therein is formed.

Subsequently, the self-agglomerate is exposed to MPTMS vapor so that an acid group is introduced also into the silicon-oxygen skeleton (Step 203 in Fig. 6), washed with water, dried, and then extracted with hydrochloric acid (Step 204 in Fig. 6) so that the surface active agent in the matrix is fully decomposed away to form a pure mesoporous thin film. The silicon substrate is then again processed with a 180°C MPTS vapor for 4 hours (Step 205 in Fig. 6) to form a silicon-oxygen crosslinked structure having mercapto group connected thereto. Thereafter, the silicon substrate is subjected to heat treatment in a 30% hydrogen peroxide for 30 minutes (Step 206 in Fig. 6), and then dried (Step 207 in Fig. 6).

In this manner, in addition to the advantage of Embodiment 1, acid groups are introduced prior to the removal of the surface active agent, making it possible to incorporate more acid groups in the structure. Thus, a protonically-conductive membrane having a high reactivity can be obtained.

The formulation of the precursor solution is not limited to that of the present embodiment. The composition ratio of the surface active agent, the silica derivative and the acid catalyst are preferably from 0.01 to 0.1, from 0.01 to 0.5 and from 0 to 5 based on 100 of the solvent. The use of the precursor solution having such a formulation makes it possible to form a membrane having cylindrical pores.

While the present embodiment has been described with reference to the case where as the surface active agent there is used a cationic cetyl trimethyl ammonium bromide (CTAB: C₁₆H₃₃N⁺ (CH₃)₃Br⁻), the invention is not limited thereto. It goes without saying that other surface active agents may be used.

However, when an alkali ion such as Na ion is used as a catalyst, it causes deterioration of semiconductor material. Therefore, a cationic surface active agent is preferably used. As a catalyst there is preferably used an acid catalyst. As such an acid catalyst there may be used nitric acid (HNO₃), sulfuric acid (H₂SO₄), phosphoric acid (H₃PO₄), H₄SO₄ or the like besides HCl.

The silica derivative is not limited to hydrogen silosesquioxane (HSQ) or methyl silosesquioxane (MSQ). Any silica derivative materials having a 4-membered or higher siloxane skeleton may be used.

While the present embodiment has been described with reference to the case where as a solvent there is used a mixture of water (H₂O) and alcohol, only water may be used.

While the present embodiment has been described with reference to the case where as a calcining atmosphere there is used a nitrogen atmosphere, calcination may be effected in vacuo or in the atmosphere. Preferably, the use of a forming gas composed of a mixture of nitrogen and hydrogen makes it possible to enhance the moisture resistance and hence reduce leakage current.

The mixing proportion of surface active agent, silica derivative, acid catalyst and solvent can be properly changed.

While the present embodiment has been described with reference to the case where the prepolymerization step is carried out by keeping the reaction mixture at a temperature of from 30°C to 150°C for 1 hour to 120 hours, the reaction temperature is preferably from 60°C to 120°C, more preferably 90°C.

While the present embodiment has been described with reference to the case where the calcination step is effected at 500°C for 6 hours, the calcination step may be effected at a temperature of from 250°C to 500°C for 1 to 8 hours, preferably from 350°C to 450°C for about 6 hours.

Even when the same processing is effected, different results are obtained from the case where a surface active agent is used to the case where no surface active agent is used. In other words, at the step of MPTMS processing (Step 203) effected prior to the removal of surface active agent, the silylating agent penetrates into and modifies the silica because the micropores have the surface active agent present therein. On the other hand, at the step of MPTMS processing (Step 205) effected after the removal of surface active agent, the silylating agent diffuses the pores and modifies the surface of the micropores.

### Embodiment 3

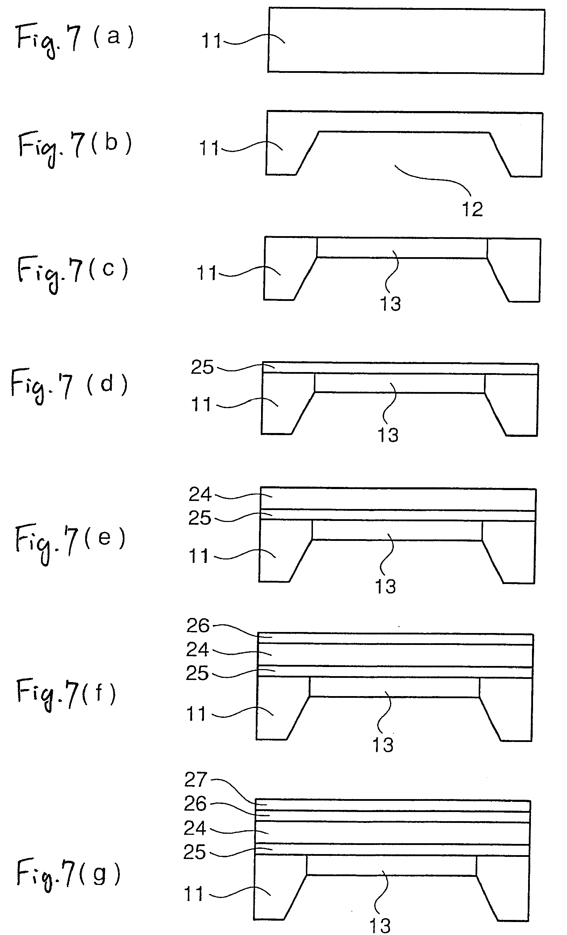

While Embodiment 1 has been described with reference to the case where the formation of the catalyst layer is carried out by electrophoresis, the formation of the catalyst layer may be carried out by plating in the present embodiment as shown in the flow sheet of Figs. 7(a) to 7(g).

As shown in Figs. 7(a) to 7(c), the processing is effected in the same manner as in Embodiment 1 until the step of reducing the thickness of the silicon substrate 11 to form a porous silicon 13.

Subsequently, as shown in Fig. 7(d), plating is effected to form a catalyst layer 25 made of a metal containing platinum on the porous silicon 13.

Subsequently, as shown in Fig. 7(e), a mesoporous thin film (protonically-conductive membrane) 24 having columnar pores aligned periodically and perpendicular to the surface of the silicon substrate is formed in the same manner as in Embodiment 1.

Subsequently, as shown in Fig. 7(f), plating is effected to form a catalyst layer 26 made of a metal containing platinum on the protonically-conductive membrane 24.

As shown in Fig. 7(g), a paste containing a particulate carbon is spread over the catalyst layer, and then calcined to form an electrode layer 27.

Thus, MEA is formed.

### Embodiment 4

While Embodiment 1 has been described with reference to the case where the formation of the mesoporous thin film is carried out by a spin coating method, the invention is not limited thereto. A dipping method may be used.

In some detail, a cationici cetyl trimethyl ammonium bromide (CTAB: C₁₆H₃₃N⁺(CH₃)₃Br) as a surface active agent, hydrogen silosesquioxane (HSQ) as a silica derivative and hydrochloric acid (HC1) as an acid catalyst are dissolved in a mixture of H₂O and alcohol, and then stirred in a mixing vessel to prepare a precursor solution. The molar ratio of these components in the precursor solution (surface active agent : silica derivative : acid catalyst) is 0.5 : 0.01 : 2 based on 100 of the solvent. The silicon substrate 11 on which the porous silicon layer 13 has been formed is dipped in the mixed solution. The mixing vessel is then sealed. The silicon substrate 11 is then kept at a temperature of from 30°C to 150°C for 1 hour to 120 hours so that the silica derivative is subjected to hydrolytic polycondensation reaction to undergo polymerization (precrosslinking step). Thus, a periodic self-agglomerate of surface active agent is formed.

This self-agglomerate forms a rod-shaped micelle structure having a plurality of molecules C₁₆H₃₃N⁺ (CH₃)₃Br agglomerated. In this arrangement, as the percent agglomeration rises with the rise of concentration, the portion freed of methyl group becomes more hollow. Thus, a crosslinked structure having pores aligned therein is formed.

Subsequently, the silicon substrate is withdrawn from the mixed solution, washed with water, dried, and then heated/calcined in a 400°C nitrogen atmosphere for 3 hours so that the surface active agent in the matrix is fully thermally decomposed away to form a pure mesoporous thin film.

### Embodiment 5

While Embodiment 1 has been described with reference to the case where the formation of the mesoporous thin film is carried out by a spin coating method, the invention is not limited thereto. A dip coating method may be used.

In some detail, the silicon substrate is allowed to descend perpendicular to the liquid level of the precursor solution prepared at a rate of from 1 mm/s to 10 m/s until it sinks in the solution, and then allowed to stand for 1 second to 1 hour.

After the lapse of a desired period of time, the silicon substrate is then allowed to ascend vertically at a rate of from 1 mm/s to 10 m/s until it is withdrawn from the solution.

Finally, the silicon substrate is calcined in the same manner as in Embodiment 1 so that the surface active agent in the matrix is fully thermally decomposed away to form a pure mesoporous thin film.

While the present embodiment has been described with reference to the case where a mesoporous thin film having columnar pores periodically aligned is used, the diameter and alignment of the pores are not limited to the present embodiment but may be changed.

As the catalyst there may be used Brij30 (C₁₂H₂₅(OCH₂CH₂)₄OH) or the like besides C16TAB.

Further, the use of Pluronic F127 (trade name) as a surface active agent makes it possible to form a three-dimensional porous thin film.

While the present embodiment has been described with reference to a crosslinked structure having a silicon-oxygen bond, a metal-oxygen crosslinked structure such as titanium-oxygen crosslinked structure, zirconium (Zr)-oxygen crosslinked structure and aluminum (Al)-oxygen crosslinked structure may be also used.

Moreover, as the acid group which is bonded to the silicon-oxygen crosslinked structure to cause protonic conduction there may be used phosphoric acid (H₃PO₄) or perchloric acid (HClO₄) besides sulfonic acid.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2003-320969, filed on September 12, 2003, the contents of which are hereby incorporated by reference.

### <Industrial Applicability>

As mentioned above, the invention can be effectively applied to DMFC type fuel cell and thus can be effectively used as an electric supply for small-sized apparatus such as cellular phone and note personal computer.

## Claims

1. A protonically-conductive membrane made of a mesoporous thin film comprising as a main component a crosslinked structure having a metal-oxygen skeleton having an acid group connected to at least a part thereof and having pores periodically aligned therein.

2. The protonically-conductive membrane as described in Claim 1, wherein the said crosslinked structure comprises a silicon-oxygen bond as a main component.

3. The protonically-conductive membrane as described in 1 or 2, wherein the said crosslinked structure has columnar pores aligned periodically in the thickness direction of the said mesoporous thin film.

4. The protonically-conductive membrane as described in any one of Claims 1 to 3, having a thickness of 10 µm or less.

5. The protonically-conductive membrane as described in any one of Claims 1 to 4, wherein the said acid group is a sulfonic acid group.

6. A fuel cell comprising a protonically-conductive membrane described in Claims 1 to 5.

7. A method for producing a protonically-conductive membrane comprising:
a step of preparing a precursor solution containing a metal-oxygen derivative and a surface active agent;
a step of crosslinking the said precursor solution to form a crosslinked structure; and
a step of decomposing the said surface active agent away from the crosslinked structure obtained at the said crosslinking step, whereby a mesoporous thin film comprising as a main component a crosslinked structure having a metal-oxygen skeleton having an acid group connected to at least a part thereof and having pores periodically aligned therein is formed.

8. The method for producing a protonically-conductive membrane as described in Claim 7, wherein there comprises a step of supplying the said precursor solution onto the surface of a substrate and the said crosslinking step involves a step of crosslinking the said precursor solution on the surface of the said substrate.

9. The method for producing a protonically-conductive membrane as described in Claim 8, wherein there comprises a step of preparing a precursor solution containing a silica derivative and a surface active agent, a step of crosslinking the said precursor solution to form a crosslinked structure and a step of decomposing the said surface active agent away, whereby a mesoporous thin film comprising as a main component a crosslinked structure having a metal-oxygen skeleton having an acid group connected to at least a part thereof and having pores periodically aligned therein is formed.

10. The method for producing a protonically-conductive membrane as described in Claim 9, wherein the said decomposing step is a step of calcining the said crosslinked structure to remove the surface active agent.

11. The method for producing a protonically-conductive membrane as described in Claim 10, comprising a step of exposing the substrate having the said precursor solution supplied therein to a tetraethoxysilane (TEOS) vapor prior to the removal of the said surface active agent to raise the density of the said silicon-oxygen skeleton.

12. The method for producing a protonically-conductive membrane as described in Claim 9, wherein the said decomposing step involves a step of extracting the said surface active agent with an acid.

13. The method for producing a protonically-conductive membrane as described in Claim 12, comprising a step of exposing the substrate having the said precursor solution supplied therein to a mercaptopropyl trimethoxysilane (MPTMS) vapor prior to the said step of extracting with an acid to silylate the said crosslinked structure.

14. The method for producing a protonically-conductive membrane as described in any one of Claims 7 to 13, comprising:
a step of preparing a precursor solution containing water, ethanol, hydrochloric acid, a surface active agent and TEOS;
a step of spreading the said precursor solution over a substrate;
a step of removing the said surface active agent to form a crosslinked structure having a silicon-oxygen skeleton;
a step of silylating the said crosslinked structure to form a crosslinked structure having a mercapto group in the silicon-oxygen skeleton; and
a step of oxidizing the mercapto group in the said crosslinked structure to form a crosslinked structure having a sulfonic acid group.

15. The method for producing a protonically-conductive membrane as described in Claim 14, wherein the said silylating step is a step of exposing to a mercaptoalkyl methoxysilane ((SH)ₙSi(CH₂)ₘ(CH₃O)₄₋ₙ; n = 1 to 3, m = 0, 1, 2 ... ) vapor.

16. The method for producing a protonically-conductive membrane as described in Claim 15, wherein the said silylating step is a step of exposing to a mercatopropyl trimethoxysilane (MPTMS) vapor.

17. The method for producing a protonically-conductive membrane as described in Claim 15, wherein the said silylating step is a step of exposing to a mercaptomethoxysilane ((SH)ₙSi(CH₃O)₄₋ₙ; n = 1 to 3) vapor.

18. The method for producing a protonically-conductive membrane as described in any one of Claims 7 to 13, comprising:
a step of preparing a precursor solution containing water, ethanol, hydrochloric acid, a surface active agent and TEOS;
a step of spreading the said precursor solution over a substrate;
a step of removing the said surface active agent to form a crosslinked structure having a silicon-oxygen skeleton; and
a step of subjecting the said crosslinked structure to treatment with phosphoric acid to form a crosslinked structure having a phosphoric acid group in the silicon-oxygen skeleton.

19. The method for producing a protonically-conductive membrane as described in Claim 18, wherein the said phosphoric acid treatment step is a step of exposing to an ethyl phosphate ((C₂H₅O)₃₋ₙ (OH)ₙPO; n = 0, 1, 2) vapor.

20. The method for producing a protonically-conductive membrane as described in Claim 18, wherein the said phosphoric acid treatment step is a step of exposing to an ethyl phosphite ((C₂H₅O)₃₋ₙ(OH)ₙP; n = 0, 1, 2) vapor.

21. The method for producing a protonically-conductive membrane as described in Claim 19, wherein the said phosphoric acid treatment step is a step of exposing to a vapor of ethyl phosphite ((C₂H₅O) (OH)₂P).
